# EUROPEAN PATENT APPLICATION

(11) **EP 2 196 718 A1**
(43) Date of publication of application: **16.06.2010**
(21) Application number: 08171507.0
(22) Date of filing: 12.12.2008
(51) Int. Cl.: F16L 37/14

(54) **Hose connection with vapour recovery**

(71) Applicant: Dresser Wayne AB, 200 61 Malmö (SE)
(72) Inventor: Larsson, Bengt I., 274 53 Skivarp (SE); Hansson, Jonas, 214 40 Malmö (SE)
(74) Representative: Milanov, Nina Vendela Maria

(57) **Abstract**

A hose connection (7) for connecting a pipe (8) and a hose (9) in a fuel dispensing unit. The hose connection comprises at least one port (11, 12). The port (11, 12) is adapted to receive a vapour recovery pipe (13, 14). The hose connection (7) further comprises a vapour recovery pipe (13, 14) provided in the at least one port (11, 12), and a locking device (17) securing the vapour recovery pipe (13, 14) in relation to the hose connection (7).

## Description

### Technical Field

The present invention relates to a hose connection for connecting a pipe and a hose in a fuel dispensing unit and to a fuel dispensing unit comprising such a hose connection.

### Background Art

When filling a tank of a motor vehicle it is common to use a fuel dispensing unit. The fuel dispensing unit is used to draw fuel from a reservoir, often disposed under ground, into the tank of the vehicle.

During the filling process, it is common and well known in the art to recover vapour escaping from the tank of the vehicle that is to be filled with fuel. The vapour is then sucked out of the tank, using a vacuum source, and fed back into the fuel reservoir. There are several reasons for doing this. One reason is that the vapour escaping the tank is poisonous and thus harmful to the environment and the person refuelling the tank of the vehicle. Another reason is that the vapour is highly flammable and does thus constitute a safety risk.

In order to draw fuel from the reservoir into the fuel tank of the vehicle the fuel dispensing unit utilizes a plurality of components including among others a hose connection. The hose connection is a component connecting a fuel pipe to a flexible fuel hose. One end of the flexible hose is connected to a nozzle, commonly supplied with a pistol grip. The nozzle with the pistol grip can then be operated by an operator and used when fuel is transferred into the tank of the vehicle. A vapour recovery pipe is generally arranged in the nozzle, to suck vapour out of the tank during the refuelling process. The vapour recovery pipe of the nozzle is commonly connected to a vapour recovery hose which often runs coaxially inside the fuel hose. The vapour recovery hose is then connected to another vapour recovery pipe in the hose connection, which vapour recovery pipe is used to transport the vapour to the fuel reservoir.

A problem with hose connections today is that the assembly of the, vapour recovery pipe is time consuming and complicated and thus involves a lot of stress for the worker performing the assembly. Another problem encountered during the assembly of the vapour recovery pipe is that various tools must be used during the assembly. Further, the vapour recovery pipe is commonly fastened to the hose connection using a threaded joint. In order to be able to fasten a threaded joint without turning the vapour recovery pipe, a swivel is utilized. A problem associated with the use of a swivel is that several seals need to be introduced in the hose connection. The fact that several seals are used imply that the risk for a leakage is increased.

Further, when several fuel hoses and accordingly several hose connections are provided within the same fuel dispensing unit it is a problem that the assembly of the vapour recovery piping becomes even more complicated and time consuming. In this case the vapour recovery pipe from each hose connection is connected together using several T-joints. This is done, since the common solution is to only use only one vacuum source for all the vapour recovery pipes within the fuel dispensing unit.

### Summary of the Invention

It is an object of the present invention to provide an improvement of the above techniques and prior art. A particular object is to provide a hose connection that reduces the above mentioned problems related to the assembly of the vapour recovery pipe. These and other objects as well as advantages that will be apparent from the following description of the present invention are achieved by a hose connection and a fuel dispensing unit according to the respective independent claims. Preferred embodiments are defined in the dependent claims.

Thus, the present invention provides a hose connection for connecting a pipe and a hose in a fuel
dispensing unit, said hose connection comprising at least one port being adapted to receive a vapour recovery pipe, a vapour recovery pipe provided in the at least one port, and a locking device securing the vapour recovery pipe in relation to the hose connection. The inventive hose connection is advantageous in that the vapour recovery pipe may be assembled more easily, requiring less time. This means that the stress experienced by the person mounting the vapour recovery pipe is significantly reduced, and at the same time, the physical work becomes less heavy and more ergonomic. Also the costs related to the vapour recovery pipe can be reduced, since a less complicated vapour recovery pipe can be used. The use of various tools can also be reduced when using the inventive hose connection.

The locking device may comprise a resilient member partly enclosing an end portion of the vapour recovery pipe. This means that the vapour recovery pipe can be fixed to the hose connection in a simple and fast manner, where no or very few tools need to be used. In this way the vapour recovery pipe is locked securely to the hose connection by the resilient member.

The locking device may be a snap locking device, which is advantageous in that the vapour recovery pipe can be rapidly and securely attached to the hose connection using no tools at all. Also the space required to secure the vapour recovery pipe to the hose connection can be significantly reduced, since no space for tools is needed.

The at least one port may comprise at least two ports, one of which may be interconnected with a port of an adjoining hose connection via a vapour recovery pipe. This is advantageous in that there is no need to use additional coupling details, such as T-joints, when assembling the vapour recovery piping.

The at least two ports may be connected to each other within said hose connection This means that the ports are in communication and thus will experience the same vacuum level i.e. the same pressure. This means in practice that it is possible to evacuate vapour through one or several ports and at the same time connect one or several ports to adjoining hose connections.

The end portion of the vapour recovery pipe may be provided with a seal member, and the end portion of the vapour recovery pipe may be adapted to enter a receiving portion in the port, in order to connect the vapour recovery pipe with the hose connection. This is advantageous in that a tight seal can be achieved between the vapour recovery pipe and the hose connection.

The end portion of the vapour recovery pipe may be provided with two annular beads which accommodate an O-ring between them, the end portion of the vapour recovery pipe may be adapted to enter a receiving portion in the port, in order to connect the vapour recovery pipe with the hose connection. This is advantageous in that a tight seal can be achieved in a simple way, where only one O-ring is used in order to seal the connection between the vapour recovery pipe and the hose connection. Further, the beads will advantageously support the O-ring and at the same time make the connection less sensitive to transversal external forces.

The resilient member may partly enclose at least one of the two beads of the vapour recovery pipe. This means that the resilient member will securely lock the vapour recovery pipe to the hose connection in a simple manner.

The vapour recovery pipe may be fixed to the hose connection. This means that the risk of leaks is further reduced, since the joint between the vapour recovery pipe and the hose connection cannot be disassembled and thus damaged. It does also mean that the joint must not (does not need to?) comprise any sealing members at all.

The inventive hose connection can advantageously be used in a fuel dispensing unit for refuelling vehicles or vessels.

### Brief Description of the Drawings

In the following, the invention will be further described with reference to the appended drawings which illustrate presently preferred embodiments of the invention, given as non-limiting examples, and in which:
Fig 1 is a schematic view of a fuel dispensing unit,
Fig 2 is a schematic perspective view of a hose connection, including a snap locking device and two ports for vapour recovery pipes,
Fig 3 is a schematic perspective view of the hose connection in Fig 1 with the vapour recovery pipes arranged in the two ports, and
Fig 4 is a schematic perspective view of a locking device according to an alternative embodiment, different from the locking device in the embodiment, shown in Fig 2 and Fig 3.

### Detailed Description of Embodiments of the Invention

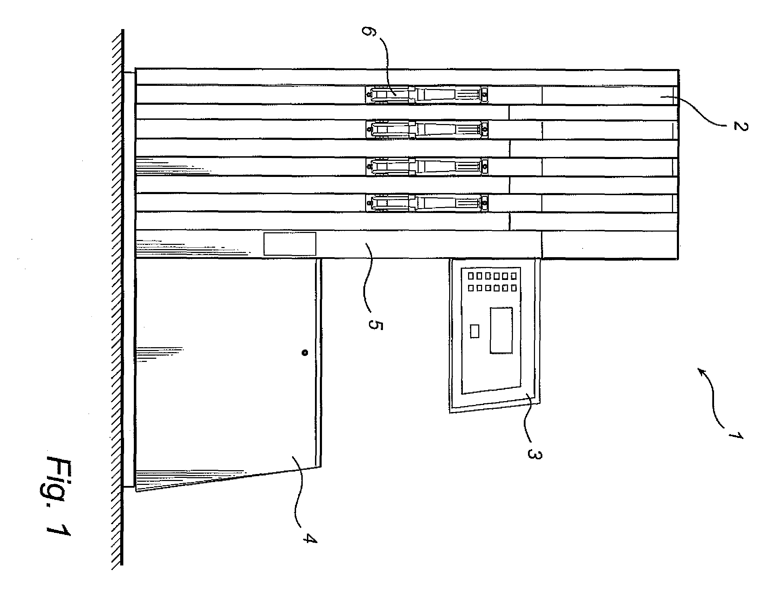

Fig. 1 shows a fuel dispensing unit 1, having four hose storage spaces 2, on each opposing side of the fuel dispensing unit 1, an electrical cabinet 3 containing all the electronics for the fuel dispensing unit 1, a hydraulic cabinet 4 containing fuel dispensing means (not shown), e.g. fuel metering means, valves, vapour recovery system etc, and a column 5 extending vertically between and separating the electrical cabinet 3 and the hydraulic cabinet 4 from the hose storage spaces 2. The fuel dispensing unit 1 is connected to an underground reservoir (not shown). When refuelling the tank of a vehicle, the fuel is drawn from the reservoir by means of a pump (not shown) which is located in the hydraulic cabinet 4, and from there to the column 5 and out to a nozzle 6 via a fuel hose 9. When refuelling does not take place, the fuel hose 9 is accommodated in a hose storage place 2 and the nozzle 6 is inserted in a nozzle boot (not shown).

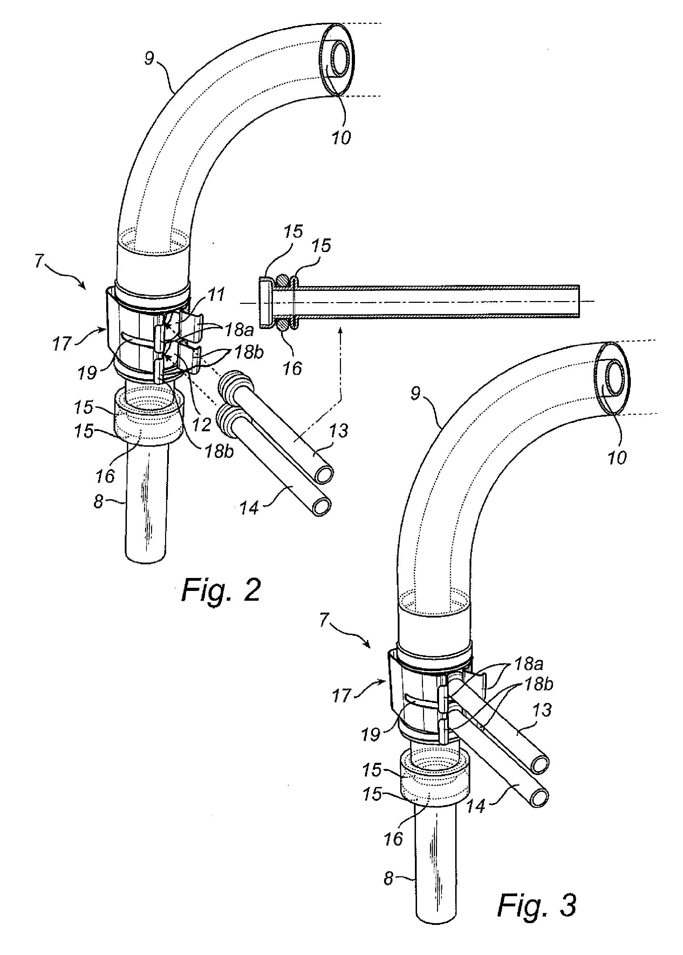

Fig 2 illustrates the inventive hose connection 7. The hose connection 7 is a component used in a fuel dispensing unit 1. The hose connection 7 is used to connect the pipe 8 to the hose 9. The pipe 8 is preferably made of aluminium and the hose 9 of elastomeric material. The hose 9 further comprises a reinforcement core making the hose 9 stronger and thus more resistant to external forces and wear. When the fuel dispensing unit 1 is used to draw fuel from the reservoir to the tank of the vehicle the fuel will flow from the reservoir through the pipe 8 via the hose connection 7, and continue into the hose 9, before entering the tank of a vehicle via the nozzle 6. When the refuelling takes place vapour is recovered from the tank of the vehicle. The recovered vapour is then fed back from the nozzle 6 via a vapour recovery hose 10. The vapour recovery hose 10 is arranged inside the hose 9. Also, the vapour recovery hose 10 comprises a reinforcement core.

The hose connection 7 is provided with two ports 11, 12 used for vapour recovery. The vapour recovery hose 10 is connected by the hose connection 7 to the vapour recovery ports 11, 12. The ports 11, 12 are provided with a receiving portion, adapted to receive an end portion of a vapour recovery pipe 13, 14. Further, the ports 11, 12 are connected to each other within the hose connection 7, meaning that the ports 11, 12 are communicating with each other. Further, the vapour recovery hose 10 is connected to the two ports 11, 12 within the hose connection 7, meaning that the ports 11, 12 and the vapour recovery hose 10 are all communicating with each other.

The ports 11, 12 are adapted to be provided with vapour recovery pipes 13, 14. The vapour recovery pipes 13, 14 are preferably made of aluminium and are provided with two annular beads 15 which accommodate an O-ring 16 between them. The annular beads 15 are pressed from the aluminium of the pipes 13, 14. In other words, the beads 15 are formed integrally with the pipes 13, 14. Also the pipe 8 is provided with two annular beads 15 which accommodate an O-ring 16 between them. Also in this case the beads 15 are pressed from the aluminium of the pipe 8.

Further, the hose connection 7 is provided with a snap locking device 17. The snap locking device 17 is formed of a thin metal plate which is machined and bent to the form of the snap locking device 17. The snap locking device 17 is provided with projections 18a, 18b. The projections 18a, 18b are shaped in such a way that it is easy to insert the end of the vapour recovery pipes 13, 14, between the projections 18a, 18b. By pushing the vapour recovery pipes 13, 14 into the ports 11, 12, the projections 18a, 18b will deflect outwards from the pipes 13, 14 in order to let the beads 15 and the O-rings 16 of the pipes 13, 14 into the ports 11, 12. Once the beads 15 are pushed into the ports 11, 12, the projections 18a, 18b will recover their initial form and thus lock the pipes 13, 14 in the ports 11, 12 by engaging the rear bead 15 (to the right in Fig. 2) of the pipes 13, 14. The locking effect is achieved by the shape of the projections 18a, 18b. If the pipes 13, 14 are to be removed from the ports 11, 12 the projections 18a, 18b need to be bent apart and separated in order to release the pipes 13, 14. Needless to say, the shape of the projections 18a, 18b can be any suitable shape, such that it is easy to insert the pipes 13, 14 into the ports 11, 12, and such that the pipes 13, 14 are locked once inserted into the ports 11, 12.

The snap locking device 17 is provided with a slit 19. The slit separates a first pair of projections 18a, arranged around port 11, from a second pair of projections 18b, arranged around port 12. This means that only the first pair of projections 18a is deflected and bent when a pipe 13 is inserted into port 11, meaning that the second pair of projections 18b is unaffected. This means that it is possible to insert and remove a pipe 13, 14 into one port 11, 12, without affecting a pipe 13, 14 already provided in the other port 11, 12.

When a fuel dispensing unit 1 is provided with a plurality of fuel hoses 9, also a plurality of hose connections 7 are used, one for each hose 9. The fuel dispensing unit 1 is provided with one vacuum source (not shown) which is connected to all hose connections 7. This means that a vapour recovery piping is assembled, which piping is used to suck vapour from the plurality of nozzles 6, via the plurality of vapour recovery hoses 10. When each hose connection is provided with two ports 11, 12 the vapour recovery piping is assembled by connecting one vapour recovery pipe 13, 14 of a first hose connection 7 to the vacuum source, and the other vapour recovery pipe 13, 14 of the first hose connection to a port 11, 12 of a second hose connection 7. Another vapour recovery pipe 13, 14 of the second hose connection 7 is then connected to a port 11, 12 of a third hose connection 7. This procedure is then repeated as many times as needed until all of the plurality of hose connections 7 are connected to each other. The one port 11, 12 of the last of the plurality of hose connections 7, which port 11, 12 is not connected to any other hose connection 7, is then plugged up in order to finalize the vapour recovery piping. The one port 11, 12 of the last of the plurality of hose connections 7 is plugged in order to not let any air enter the vapour recovery piping through the port 11, 12.

Fig 3 illustrates the hose connection 7 of Fig 2 with the vapour recovery pipes 13, 14 inserted into the ports 11, 12. The projections 18a, 18b of the snap locking 17 are partly enclosing the annular beads 15 of the pipes 13, 14, meaning that the pipes 13, 14 are securely locked in the ports 11, 12. The snap locking does not need to exert any force pushing the pipes 13, 14 into the ports 11, 12. This is because the vacuum source will pull the pipes 13, 14 into the ports 11, 12.

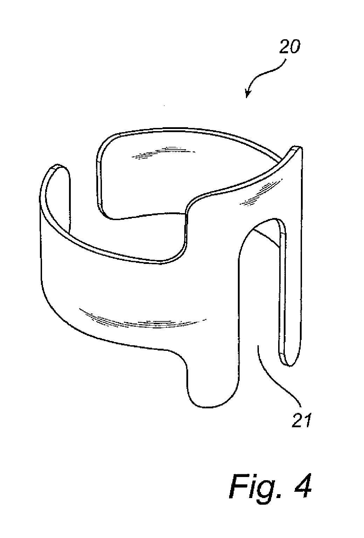

Fig 4 illustrates an alternative locking device 20. The locking device 20 can be used instead of the snap locking 17 to secure the pipes 13, 14 in the ports 11, 12. When the locking device 20 is used the pipes 13, 14 are first inserted into the ports 11, 12. The locking device 20 is then slid along the hose connection 7, in order to let the slit 21 enclose the rear annular beads 15 of the pipes 13, 14. The locking device 20 is resilient and can thus be expanded, i.e. bent out, in order to be slid along the hose connection 7 more easily. By expanding the locking device 20 further, the locking device 20 can also be removed from the hose connection 7 or fitted around the hose connection 7.

A person skilled in the art will realise that a large number of modifications of the here described embodiments of the invention are conceivable within the scope of the invention, which is defined in the appended claims.

For instance, the snap locking device 17 or locking device 20 can be replaced by any other suitable kind of locking device, which is able to secure the vapour recovery pipes 13, 14 to the hose connection 7. Suitable locks include, for instance, screws, bolts, lock washers, lock plates, pins, rivets and the like. The snap locking device 17 is however preferred and can naturally be used with any number of vapour recovery pipes 13, 14, including one vapour recovery pipe.

It is also possible to use various kinds of resilient members to lock the vapour recovery pipes 13, 14 in the ports 11, 12. For instance, a clamp ring can be placed around the hose connection 7. The clamp ring can then be slid along the hose connection in order to enclose the end portion of the vapour recovery pipes 13, 14 and thus secure the pipes 13, 14 to the hose connection 7. It is, for instance, also possible to provide the vapour recovery pipes 13, 14 with a resilient member, which can then clasp the hose connection 7 and thus lock the pipes 13, 14 in relation to the hose connection 7.

For example, the hose connection 7 can be provided with one single port, meaning that only one vapour recovery pipe will be connected to the hose connection 7. The snap locking device 17 can of course be used also for a hose connection 7 having only one port. Further, the snap locking device 17 can easily be modified in order to be able to secure more than two vapour recovery pipes 13, 14, and thus be used for a hose connection 7 having more than two ports.

It is also possible to provide the vapour recovery pipes 13, 14 with any type of suitable seal member in order to form a tight seal between the vapour recovery pipes 13, 14 and the ports 11, 12. The seal can, for instance, be a gasket, a packing, a lining and the like. It is also possible to provide the ports 11, 12 with a gasket, an O-ring or the like. Yet another approach is to use a caulking compound or glue to seal the joint between the vapour recovery pipes 13, 14 and the ports 11, 12. The caulking compound or glue can be any kind of suitable caulking compound or glue, i.e. any caulking compound or glue which can resist fuel vapour.

The vapour recovery pipes 13, 14 may for example be provided with one or several beads 15. To simplify the vapour recovery pipes, it is possible to use one single bead 15 in combination with an O-ring 16.

It is also possible to connect the pipe 8 to the hose connection 7 using different coupling means like, welding, soldering, screwing, bolting, crimping etc.

For instance, the vapour recovery pipes 13, 14 can be fixed to the ports 11, 12, meaning that the vapour recovery pipes 13, 14 are not detachable from the hose connection 7. Further it is of course possible to have only one or more than two vapour recovery pipes, which pipes 13, 14 are fixed in a non detachable manner to the hose connection 7. The pipes 13, 14 can for instance, be fixed to the hose connection, by welding or soldering the pipes 13, 14 to the hose connection. It is also possible for instance to fix the pipes 13, 14 by the use of rivets, quick couplings, crimp couplings or any other suitable type of couplings.

## Claims

1. A hose connection (7) for connecting a pipe (8) and a hose (9) in a fuel dispensing unit (1), comprising
at least one port (11, 12), said port (11, 12) being adapted to receive a vapour recovery pipe (13, 14),
a vapour recovery pipe (13, 14) provided in said at least one port (11, 12), and
a locking device (17, 20) securing said vapour recovery pipe (13, 14) in relation to said hose connection (7).

2. A hose connection (7) according to claim 1, wherein said locking device (17, 20) comprises a resilient member partly enclosing an end portion of said vapour recovery pipe (13, 14).

3. A hose connection (7) according to claim 1, wherein said locking device (17, 20) is a snap locking device (17).

4. A hose connection (7) according to any of the claims 1-3, wherein said at least one port (11, 12) comprises at least two ports (11, 12), one of which is interconnected with a port (11, 12) of an adjoining hose connection (8) via a vapour recovery pipe (13, 14).

5. A hose connection (7) according to claim 4, wherein said at least two ports (11, 12) are connected to each other within said hose connection (7).

6. A hose connection (7) according to any of the preceding claims, wherein an end portion of said vapour recovery pipe (13, 14) is provided with a seal member, said end portion of said vapour recovery pipe (13, 14) being adapted to enter a receiving portion in said port (11, 12), in order to connect said vapour recovery pipe (13, 14) with said hose connection (7).

7. A hose connection (7) according to any of the preceding claims, wherein an end portion of said vapour recovery pipe (13, 14) is provided with two annular beads (15) which accommodate an O-ring (16) between them, said end portion of said vapour recovery pipe (13, 14) being adapted to enter a receiving portion in said port (11, 12), in order to connect said vapour recovery pipe (13, 14) with said hose connection (7).

8. A hose connection (7) according to claim 7, wherein said resilient member partly encloses at least one of said two beads (15) of said vapour recovery pipe (13, 14).

9. A hose connection (7) according to any of the preceding claims, wherein said vapour recovery pipe (13, 14) is fixed to said hose connection (7).

10. A fuel dispensing unit (1) for refuelling vehicles or vessels, comprising a hose connection (7) according to any one of the preceding claims 1-9.
